# EUROPEAN PATENT APPLICATION

(11) **EP 4 765 579 A1**
(43) Date of publication of application: **24.06.2026**
(21) Application number: 25222525.5
(22) Date of filing: 11.12.2025
(51) Int. Cl.: H02J 9/06

(54) **UNINTERRUPTIBLE POWER SUPPLY**

(30) Priority: 17.12.2024 CN 202411861538
(71) Applicant: Santak Electronic (Shenzhen) Co., Ltd., Guangdong 518101 (CN)
(72) Inventor: ZHANG, DONGYU, SHENZHEN (CN); YANG, YUE, SHENZHEN (CN); WEI, ZHICHENG, SHENZHEN (CN)
(74) Representative: Schwan Schorer & Partner mbB

(57) **Abstract**

The present invention provides an uninterruptible power supply, including: a primary branch, including a rectifier module and an inverter module; a battery branch, including a bidirectional power conversion module and a battery; and a controller, including a charge/discharge controller. The charge/discharge controller is configured to: when an increment of a load amount of the load is greater than a first preset threshold, control the bidirectional power conversion module to perform DC-DC conversion on a direct current output by the battery, so that the battery supplies power to the load to meet an increased power requirement of the load, thereby maintaining a stable output power of the alternating current power supply; and when a decrement of the load amount of the load is greater than a second preset threshold, control the bidirectional power conversion module to perform DC-DC conversion on a direct current that is output by the rectifier module and exceeds a power requirement of the load to charge the battery, thereby maintaining a stable output power of the alternating current power supply.

## Description

### TECHNICAL FIELD

The present invention relates to the field of power supplies, and in particular, to an uninterruptible power supply.

### BACKGROUND

The statements in this part are merely intended to provide background information related to the present invention, to help understand the present invention. The background information does not necessarily constitute the prior art.

An uninterruptible power supply (UPS) is a voltage-stable and frequency-stable alternating current power supply that includes a battery and is mainly composed of a rectifier and an inverter. The UPS uses the battery mainly to provide uninterrupted power supply to computer and communication network systems or industrial control systems, industrial devices that require continuous operation, and the like, such as computers, servers, storage devices, and network devices, when the power is off. When an input of a mains supply is normal, the UPS stabilizes the voltage of the mains supply and supplies the mains supply to a load for use and to charge the battery at the same time. When the mains supply fails, the UPS provides the electrical energy of the battery to the load, to keep the load operating normally and protect the software and hardware of the load from damage.

Based on its excellent uninterruptible power supply capability, the UPS is widely used in various super-large-scale data centers around the world. In recent years, the power consumption designed for data centers is continually increasing with the rapid application of generative artificial intelligence (AI) in data centers. When an AI algorithm is not operated by a data center, most (e.g., 75%) GPUs (Graphics Processing Unit) are in a sleep state. However, when the AI algorithm is run, a power requirement of the data center increases as the AI load increases (e.g., increases by at least 50%). Therefore, the power requirement of the data center fluctuates substantially in a short time as the AI load runs or stops running, for example, a sudden increase from 20% to 50% or a sudden drop from 50% to 20% within 20 ms in a load amount, which is not conducive to long-term stable operation of a power grid and may cause impact or even cause failures to the power grid or a generator. How to avoid the impact on the power grid or the generator caused by large fluctuation or frequent fluctuation of the AI load or other types of load is an urgent problem to be resolved at present. Therefore, it is necessary to improve the UPS and a control method thereof to resolve the foregoing problem.

### SUMMARY

Therefore, an objective of the present invention is to overcome the foregoing disadvantages in the prior art, and provide an uninterruptible power supply, including:
an input terminal, configured to be electrically connectable to an alternating current power supply;
an output terminal, configured to be electrically connectable to a load;
a primary branch, including a rectifier module and an inverter module that are electrically connected in sequence between the input terminal and the output terminal;
a battery branch, including a bidirectional power conversion module and a battery, and configured to be electrically connected to a node between the rectifier module and the inverter module; and
a controller, including a charge/discharge controller, the charge/discharge controller being configured to:
   when an increment of a load amount of the load is greater than a first preset threshold, control the bidirectional power conversion module to perform DC-DC conversion on a direct current output by the battery, so that the battery supplies power to the load to meet an increased power requirement of the load, thereby maintaining a stable output power of the alternating current power supply; and
   when a decrement of the load amount of the load is greater than a second preset threshold, control the bidirectional power conversion module to perform DC-DC conversion on a direct current that is output by the rectifier module and exceeds a power requirement of the load, so as to charge the battery, thereby maintaining a stable output power of the alternating current power supply.

According to the uninterruptible power supply of the present invention, preferably, the charge/discharge controller is configured to:
provide a first set current value based on a comparison between a direct current bus reference voltage and a direct current bus sampling voltage of the primary branch;
when the first set current value is greater than a first preset current threshold, control the bidirectional power conversion module based on a comparison between the first set current value and a direct current bus sampling current, so that the battery supplies power to the load to meet the increased power requirement of the load, thereby maintaining a stable output power of the alternating current power supply; and
when the first set current value is less than a second preset current threshold, control, based on the comparison between the first set current value and the direct current bus sampling current, the bidirectional power conversion module to perform DC-DC conversion on the direct current that is output by the rectifier module and exceeds the power requirement of the load, so as to charge the battery, thereby maintaining a stable output power of the alternating current power supply.

According to the uninterruptible power supply of the present invention, preferably, the controller is further configured to obtain an average load amount of the load over a specified period of time.

According to the uninterruptible power supply of the present invention, preferably, the first preset threshold and the second preset threshold are 5% to 30% of the average load amount.

According to the uninterruptible power supply of the present invention, preferably, the first preset current threshold and the second preset current threshold are in direct proportion to a current average value, and the current average value is a ratio of the average power of the load over the specified period of time to the direct current bus reference voltage.

According to the uninterruptible power supply of the present invention, preferably, the controller further includes a rectifier controller and an inverter controller, wherein the rectifier controller is configured to control the rectifier module and the inverter controller is configured to control the inverter module.

According to the uninterruptible power supply of the present invention, preferably, the rectifier controller is configured to: when the decrement of the load amount of the load is greater than the second preset threshold and the battery has been fully charged, control an actual voltage of a direct current bus of the primary branch not to exceed a direct current bus voltage limit.

According to the uninterruptible power supply of the present invention, preferably, wherein the rectifier controller is further configured to:
provide a first current reference value based on a comparison between the direct current bus voltage limit and the direct current bus sampling voltage;
provide a second current reference value, the second current reference value being a ratio of the average power of the load over the specified period of time to a RMS value of an input voltage of the alternating current power supply;
use the minimum value in the first current reference value and the second current reference value as a second set current value; and
control the rectifier module based on a comparison between the second set current value and an output current of the rectifier module.

According to the uninterruptible power supply of the present invention, preferably, the bidirectional power conversion module includes two separate DC-DC converters or the bidirectional power conversion module is a bidirectional DC-DC converter.

According to the uninterruptible power supply of the present invention, preferably, the direct current bus voltage limit is in direct proportion to the direct current bus reference voltage.

In the present invention, a charge/discharge controller is used to control stability of a direct current bus voltage, and a direct current bus voltage control principle during charging and discharging of the battery of the uninterruptible power supply is fully considered, realizing a stable power output of the alternating current power supply when a fluctuation of the load amount of the load exceeds a preset threshold. That is, the output power of the alternating current power supply does not fluctuate due to a large fluctuation of the load, thereby avoiding impact of the large fluctuation of the load on an alternating current power grid and electrical devices thereof or avoiding inefficient electricity production of a generator caused by the large fluctuation of the load. In addition, when the load increases greatly, the battery is controlled to supply power. Therefore, impact of an instantaneous high output current from the alternating current power supply due to a large increase in a load current on other electrical devices is avoided.

### BRIEF DESCRIPTION OF DRAWINGS

The following further describes embodiments of the present invention with reference to the accompanying drawings, where:
FIG. 1 is a schematic diagram of a circuit of a UPS according to an embodiment of the present invention;
FIG. 2 is a schematic diagram of a circuit of a UPS when an increment of a load amount of a load of the UPS is greater than a first preset threshold Th1 according to an embodiment of the present invention;
FIG. 3 is a schematic diagram of a circuit of a UPS when a decrement of a load amount of a load of the UPS is greater than a second preset threshold Th2 according to an embodiment of the present invention;
FIG. 4 is a circuit topology diagram of an embodiment of a charging/discharging module shown in FIG. 1 to FIG. 3;
FIG. 5 is a control block diagram of a UPS control method according to an embodiment of the present invention; and
FIG. 6 is a curve graph showing changes over time of a load power and an input power of an alternating current power supply after adopting a UPS or UPS control method according to embodiments of the present invention.

### DETAILED DESCRIPTION

To make the objectives, technical solutions, and advantages of the present invention clearer, the following further describes the present invention in detail through specific embodiments with reference to the accompanying drawings. It should be noted that the embodiments provided in the present invention are used only for description, and are not intended to limit the protection scope of the present invention.

A UPS generally includes an AC-DC conversion module (rectifier), a DC-AC conversion module (inverter), a battery, a DC-DC conversion module (charging module) for charging the battery, and a DC-DC conversion module (discharging module) for performing direct current conversion on an output voltage of the battery. Generally, when the output of an alternating current power supply is normal, the UPS performs conversion on the alternating current through the rectifier and the inverter and then supplies the current to a load for use, and can charge the battery through the charging module at the same time. When the alternating current power supply fails, the UPS provides the electrical energy of the battery to the load through the discharging module, to keep the load operating normally and protect the software and hardware of the load from damage.

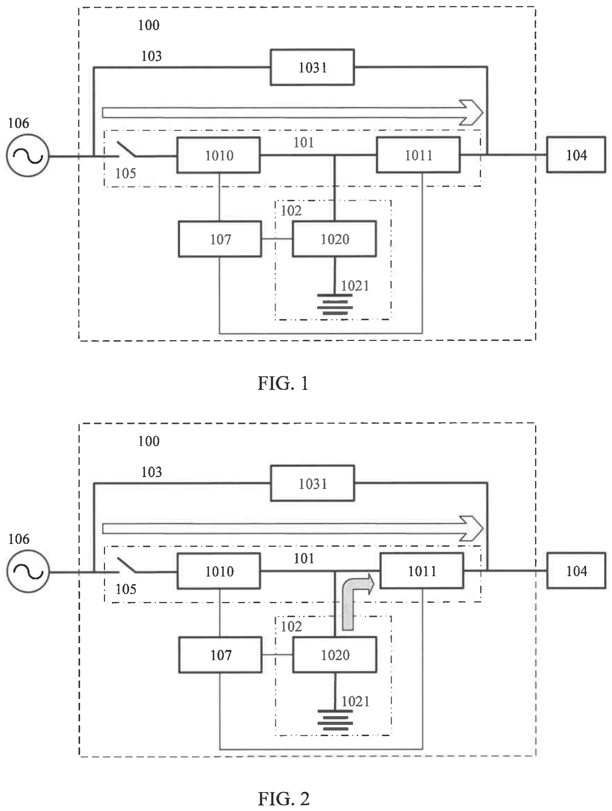

An embodiment of the present invention provides an improved UPS. FIG. 1 shows a schematic diagram of the circuit of the UPS in this embodiment. The UPS 100 includes an input terminal, an output terminal, a primary branch 101, a battery branch 102, a bypass branch 103, and a UPS controller 107. Wherein, the input terminal of the UPS 100 is configured to be electrically connected to an alternating current power supply 106, and its output terminal is configured to be electrically connected to a load 104. The primary branch 101 includes a rectifier module 1010 and an inverter module 1011 that are connected in sequence between the input terminal and the output terminal of the UPS 100. Preferably, the primary branch 101 further includes a primary input switch 105, and the primary input switch 105 is connected in series between the input terminal of the UPS 100 and the rectifier module 1010. The battery branch 102 includes a charging/discharging module (also referred to as a power conversion module) 1020 and a battery 1021. The battery branch 102 is configured to be electrically connected to a node between the rectifier module 1010 and the inverter module 1011. The bypass branch 103 includes a bypass switch 1031 and is configured to be connected in parallel with the primary branch 101. The UPS controller 107 is configured to control the UPS 100. Preferably, the UPS controller 107 includes a rectifier controller, an inverter controller, and a charge/discharge controller (not shown in the figure). The rectifier controller, the inverter controller, and the charge/discharge controller may be separate modules implemented by using hardware and/or software, or may be implemented as an integrated module.

The primary input switch 105 is configured to control conduction and disconnection between the alternating current power supply 106 and the primary branch 101. The rectifier module 1010 is configured to convert an input alternating current into a direct current and provide the direct current to the inverter module 1011. The inverter module 1011 is configured to convert the input direct current into an alternating current and provide the alternating current to the load 104. The bypass switch 1031 is used to control switching between the primary branch 101 and the bypass branch 103. Preferably, the bypass switch 1031 is a static switch. The charging/discharging module 1020 is configured to be capable of bidirectionally transmitting and converting a direct current. Preferably, the charging/discharging module 1020 includes a charging mode and a power supply mode. Wherein, when switching to the charging mode, the charging/discharging module 1020 is configured to perform direct current conversion on part of a direct current output by the rectifier module 1010 to charge the battery 1021. When switching to the power supply mode, the charging/discharging module 1020 is configured to perform direct current conversion on a direct current output by the battery 1021 to provide to the inverter module 1011. The inverter module 1011 is configured to convert the input direct current into an alternating current, and to provide the alternating current to the load 104. The UPS controller 107 is configured to control the UPS 100. Wherein, the rectifier controller is configured to control the rectifier module 1010, the inverter controller is configured to control the inverter module 1011, and the charge/discharge controller is configured to control the charging/discharging module 1020.

In an embodiment, the UPS includes, for example, a controllable switch such as a MOSFET, and the UPS controller is configured as a processing circuit for performing On/Off drive control of each MOSFET. The processing circuit may be composed of digital electronic circuits such as an operation processing apparatus and a storage apparatus, or may be composed of analog electronic circuits such as a comparator, an operational amplifier, and a differential amplifier, or may be composed of both digital electronic circuits and analog electronic circuits.

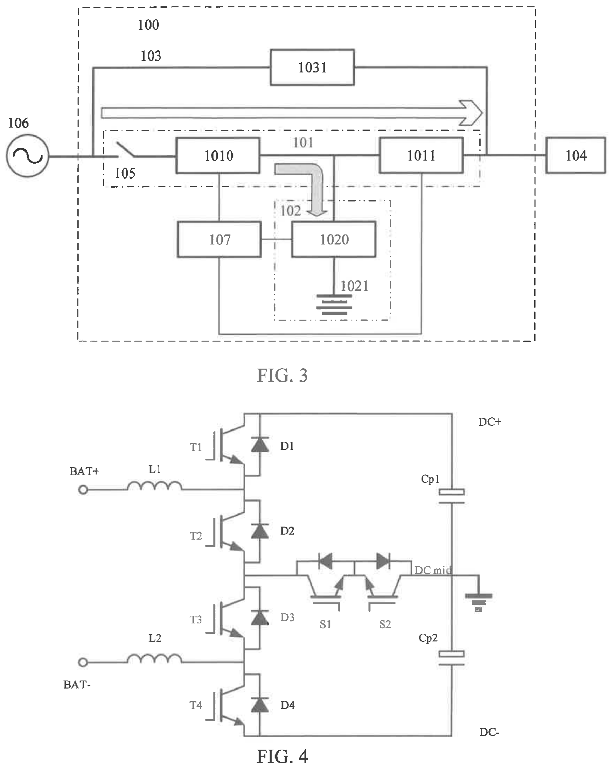

In an embodiment of the present invention, the alternating current power supply 106 is an alternating current power grid (for example, a mains supply), and supplies power to a data center through the UPS 100. Data centers are the core of the modern information technology infrastructure and support key business applications such as customer relationship management, enterprise resource planning, and supply chain management systems. Components of a data center include a server, a storage device, a network device, cooling and power supply devices, and monitoring and management systems. The main functions of the data center include data storage, data processing, data network, data security, and data backup and recovery. When the data center switches its computational scale (for example, switching from small-scale computing to large-scale computing, such as switching from a conventional computing to AI computing, or vice versa), a fluctuation of a load will impact a power grid and other electrical devices in the power grid, especially when a load amount of the load fluctuates greatly, a fault may even be caused. In this embodiment, the battery 1021 is configured to have a specified amount of power between full discharge and full charge of the battery 1021. For example, the specified amount of power is represented by a battery state of charge (SOC). The SOC refers to an available state of remaining charges in the battery, and reflects a remaining capacity of the battery. In a case of full discharge, the SOC is 0, and in a case of full charge, the SOC is 100%. When an increment of the load amount of the load 104 is greater than a first preset threshold Th1, as shown in FIG. 2, the charge/discharge controller controls the charging/discharging module 1020 to perform direct current conversion on a direct current output by the battery 1021, and then provide the direct current to the inverter module 1011. The inverter module 1011 converts the input direct current into an alternating current and provides the alternating current to the load 104. In this case, the battery 1021 supplies power to the data center cooperatively with the alternating current power supply 106. Preferably, the charge/discharge controller controls the battery 1021 to supply power to the load 104 to meet an increased power requirement of the load, thereby maintaining a stable output power of the alternating current power supply. When a decrement of the load amount of the load 104 is greater than a second preset threshold Th2, as shown in FIG. 3, the charge/discharge controller controls the charging/discharging module 1020 to perform direct current conversion on part of the direct current output by the rectifier module 1010, so as to charge the battery 1021. Preferably, the charge/discharge controller controls the charging/discharging module 1020 to perform DC-DC conversion on the direct current that is output by the rectifier module 1010 and exceeds a power requirement of the load 104, so as to charge the battery 1021, thereby maintaining a stable output power of the alternating current power supply. In this way, the output power of the alternating current power grid remains stable when the load fluctuates greatly, thereby avoiding impact or other adverse effects of a large fluctuation of the load on the alternating current power grid and electrical devices thereof.

In addition, this embodiment is also applicable to a case in which a power supply capability of the alternating current network is insufficient. For example, in a peak period of power consumption in summer, when the output power of the alternating current power grid cannot meet the power requirement of the data center, the UPS controller 107 can control the charging/discharging module 1020 of the UPS to switch to the power supply mode, so that the battery 1021 supplies power to the data center cooperatively with the alternating current power supply 106 to maintain normal operation of the data center.

In another embodiment of the present invention, the alternating current power supply 106 is a generator, and the UPS 100 supplies power to the data center. In this embodiment, when an increment of the load amount of the load 104 is greater than a first preset threshold Th1, the charge/discharge controller controls the charging/discharging module 1020 to perform direct current conversion on a direct current output by the battery 1021, and then provide the direct current to the inverter module 1011. The inverter module 1011 converts the input direct current into an alternating current and provides the alternating current to the load 104. In this case, the battery 1021 supplies power to the data center cooperatively with the generator. Preferably, to keep the bus voltage of the primary branch 101 stable, the charge/discharge controller controls the battery 1021 to supply power to the load 104 to meet the increased power requirement of the load. When the decrement of the load amount of the load 104 is greater than the second preset threshold Th2, the charge/discharge controller controls the charging/discharging module 1020 to perform direct current conversion on part of the direct current output by the rectifier module 1010, so as to charge the battery 1021. Preferably, to keep the bus voltage of the primary branch 101 stable, the charge/discharge controller controls the charging/discharging module 1020 to perform DC-DC conversion on the direct current that is output by the rectifier module 1010 and exceeds the power requirement of the load 104, so as to charge the battery 1021. In this way, impact and interference on the generator caused by a large fluctuation of the load can be avoided, and reduction of generator efficiency probably caused by increasing or decreasing the output power of the generator in real time by the generator based on variation of the load amount can also be avoided. In addition, this embodiment can also enable the generator to ensure reliable operation of the data center in a small volume or size, without causing power waste when the data center is under low load.

In the embodiments of the present invention, a large fluctuation of the load refers to that an increment of the load amount is greater than the first preset threshold Th1 or a decrement of the load amount is greater than the second preset threshold Th2.

In the embodiments of the present invention, the load amount is an electrical parameter of the load, including a voltage, a current, a power, and the like.

In the embodiments of the present invention, the battery 1021 is configured to have a charging capacity and a discharging capacity that are required to meet energy scheduling under load fluctuation. That is, when the battery 1021 is needed to supply power, the battery has enough power to supply power to the increased load of the load 104, and when the electrical energy that is output by the alternating current power supply 106 and exceeds the power requirement of the load 104 needs to be transferred to the battery 1021, the battery has enough capacity to receive the electrical energy.

In some embodiments of the present invention, the UPS controller 107 is further configured to count an average load amount of the load 104 over a specified period of time. The specified period of time may be determined according to an actual requirement, for example, the specified period of time is one minute, three hours, or one week, etc. The first preset threshold Th1 and the second preset threshold Th2 are in direct proportion to the average load amount, and may be determined according to an actual requirement (for example, a degree of tolerance of the alternating current power grid to impact caused by a load fluctuation). For example, the first preset threshold Th1 and the second preset threshold Th2 may be selected between 5% and 30% of the foregoing average load amount, for example, 2%, 3%, 5%, 10%, 15%, 20%, 25% of the average load amount. In some embodiments of the present invention, the first preset threshold Th1 may be equal to the second preset threshold Th2.

The following describes an operating principle of the UPS 100 by using an example in which the alternating current power supply 106 is an alternating current power grid.

When an increment of the load amount of the load of the UPS is less than or equal to the first preset threshold Th1 or a decrement of the load amount is less than or equal to the second preset threshold Th2, that is, when the load amount of the load 104 does not fluctuate greatly, an alternating current output by the alternating current power supply 106 is input to the rectifier module 1010 through the primary input switch 105, and the rectifier module 1010 converts the input alternating current into a direct current and outputs the direct current to the inverter module 1011. The inverter module 1011 converts the input direct current into an alternating current and provides the alternating current to the load 104, to supply power to the load 104. In addition, the charge/discharge controller controls the charging/discharging module 1020 to switch to the charging mode, and perform a DC-DC conversion on part of a direct current output by the rectifier module 1010 to charge the battery 1021 to a specific amount of power, where the specific amount of power preferably is 20% to 80% of the full capacity of the battery, that is, 20% to 80% of the SOC.

When an increment of the load amount of the load 104 is greater than the first preset threshold Th1, as shown in FIG. 2, the charge/discharge controller controls the charging/discharging module 1020 to perform direct current conversion on the direct current output by the battery 1021, and then provide the direct current to the inverter module 1011. The inverter module 1011 converts the input direct current into an alternating current and provides the alternating current to the load 104. In this case, the battery 1021 supplies power to the data center cooperatively with the alternating current power supply 106. Preferably, to keep the bus voltage of the primary branch 101 stable, the charge/discharge controller controls the battery 1021 to supply power to the increased load of the load 104.

When a decrement of the load amount of the load 104 is greater than the second preset threshold Th2, as shown in FIG. 3, the charge/discharge controller controls the charging/discharging module 1020 to perform direct current conversion on part of the direct current output by the rectifier module 1010 to charge the battery 1021. Preferably, to keep the bus voltage of the primary branch 101 stable, the charge/discharge controller controls the charging/discharging module 1020 to perform DC-DC conversion on the direct current that is output by the rectifier module 1010 and exceeds the power requirement of the load 104, so as to charge the battery 1021.

When the alternating current power supply 106 fails, it cannot output electrical energy to supply power to the load 104. In this case, the charge/discharge controller controls the charging/discharging module 1020 to switch to the power supply mode, and perform direct current conversion on the direct current output by the battery 1021 to provide to the inverter module 1011. The inverter module 1011 converts the input direct current into an alternating current and provides the alternating current to the load 104.

When the primary branch 101 and the battery branch 102 of the UPS 100 fail, the bypass switch 1031 is closed, the alternating current power supply 106 supplies power to the load 104 through the bypass branch 103, and the current does not flow through the primary branch 101 and the battery branch 102.

In some embodiments of the present invention, the charging/discharging module 1020 includes two DC-DC converters, which are respectively used for charging the battery and discharging the battery. The circuit topologies and operating principles of a DC-DC converter are well-known in the art, and details are not described herein again.

In some embodiments of the present invention, the charging/discharging module 1020 is a bidirectional DC-DC converter. FIG. 4 shows a circuit topology of an embodiment of the charging/discharging module 1020 shown in FIG. 1 to FIG. 3. As shown in FIG. 4, the bidirectional DC-DC converter includes inductors L1 and L2, switching transistors T1, T2, T3, and T4, diodes D1, D2, D3, and D4, switching transistors S1 and S2, and capacitors Cp1 and Cp2. Because the operating principles of the bidirectional DC-DC converter are well-known in the art, details are not described herein again. The circuit topology of the bidirectional DC-DC converter shown in FIG. 4 is exemplary rather than limiting, and all bidirectional DC-DC converters well-known to those skilled in the art can be applied to the present invention.

In some embodiments of the present invention, the rectifier module 1010 is a bidirectional rectifier module, and the inverter module 1011 is a bidirectional inverter module. The bidirectional rectifier module and the bidirectional inverter module used in the embodiments of the present invention can provide flexibility of energy flow control, meeting complex power requirements of customers. In an embodiment, the load is an energy regeneration load. When the energy regeneration load is unloaded, the load can return energy to the battery 1021 to charge the battery through the inverter module 1011 and the charging/discharging module 1020, or return energy to the alternating current power grid through the inverter module 1011 and the rectifier module 1010.

In some embodiments of the present invention, to ensure power usage safety, the charge/discharge controller needs to first control the charging/discharging module 1020 to disable the charging mode before switching to the power supply mode, and vice versa.

An embodiment of the present invention further provides a control method for the UPS 100 shown in FIG. 1 to FIG. 3. The control method includes the following steps:

The UPS controller 107 is controlled to count the average load power Pav of the load 104 within 48 hours, the first preset threshold Th1=Pav*20%=0.2*Pav is determined according to an actual requirement, and Th2=Th1 is selected.

The UPS controller 107 is controlled to sample the load power Pt of the load 104, and when the load power Pt is within a range of 0.8*Pav to 1.2*Pav, the rectifier module 1010 and inverter module 1011 are controlled to perform rectification, inversion and voltage stabilization on the alternating current output by the alternating current power supply 106 to output to the load 104 for power supply; and meanwhile the charging/discharging module 1020 is controlled to switch to the charging mode, and perform DC-DC conversion on part of the direct current output by the rectifier module 1010 to charge the battery 1021 to a specific amount of power, for example, 50% of the battery capacity.

When an increment of the load power Pt is greater than 0.2*Pav, the charging/discharging module 1020 is controlled to perform direct current conversion on the direct current output by the battery 1021 to provide to the inverter module 1011, and the inverter module 1011 converts the input direct current into an alternating current and provides the alternating current to the load 104 to supply power to the increased load of the load 104. When a decrement of the load power Pt is greater than 0.2*Pav, the charging/discharging module 1020 is controlled to perform DC-DC conversion on the direct current that is output by the rectifier module 1010 and exceeds the power requirement of the load 104, so as to charge the battery 1021.

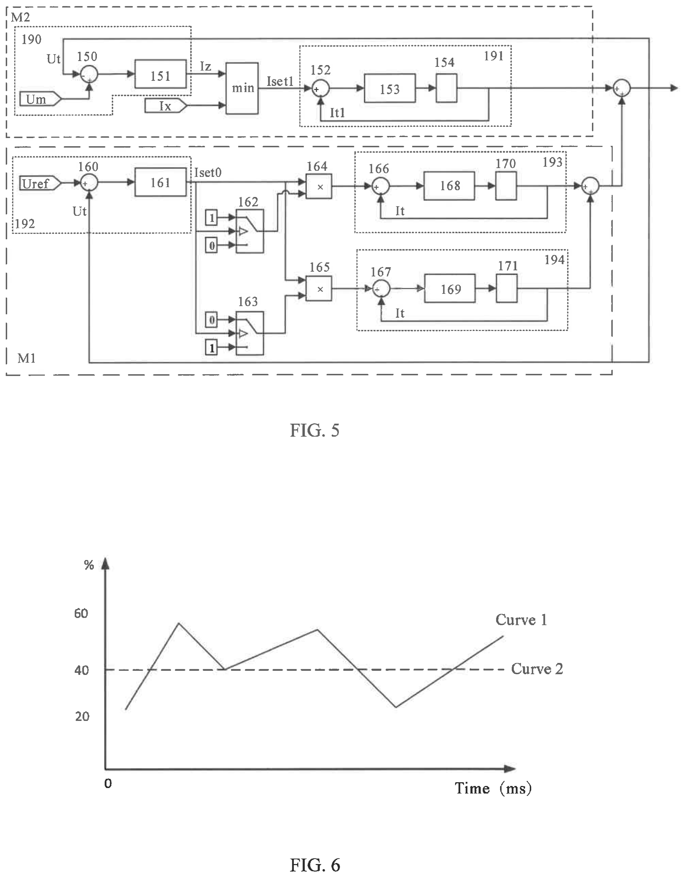

In some embodiments of the present invention, as shown in FIG. 5, the charge/discharge controller of the UPS 100 includes a battery charge/discharge control module M1.

The battery charge/discharge control module M1 is configured to selectively perform charge control and discharge control on the battery 1021 when a variation of the load amount of the load 104 meets a specified condition, to keep the bus voltage of the primary branch 101 stable. Specifically, when an increment of the load amount of the load 104 is greater than the first preset threshold Th1, the battery charge/discharge control module M1 outputs a discharge current control signal to control the charging/discharging module 1020, so that the battery 1021 supplies power to the increased load of the load 104; and when a decrement of the load amount of the load 104 is greater than the second preset threshold Th2, the battery charge/discharge control module M1 outputs a charge current control signal to control the charging/discharging module 1020 to perform DC-DC conversion on the direct current that is output by the rectifier module 1010 and exceeds the power requirement of the load 104, so as to charge the battery 1021. The battery charge/discharge control module M1 includes a charge/discharge control voltage loop 192, a charge control current loop 194, and a discharge control current loop 193.

The charge/discharge control voltage loop 192 compares a direct current bus reference voltage Uref with a direct current bus sampling voltage Ut of the primary branch 101by a first comparison module 160, to calculate a voltage control error. After the voltage control error is adjusted by a first PI control algorithm 161, a first set current value Iset0 is obtained. When the load amount of the load 104 fluctuates, it will cause the direct current bus sampling voltage Ut to fluctuate, thereby resulting in a change in the first set current value Iset0.

A first switch module 162 selectively turns on its input port 1 and input port 0 based on a comparison between the first set current value Iset0 and a first preset current threshold I1, and a second switch module 163 selectively turns on its input port 1 and input port 0 based on a comparison between the first set current value Iset0 and a second preset current threshold I2.

When the first set current value Iset0 is greater than the first preset current threshold I1, the input port 1 of the first switch module 162 is turned on, the first set current value Iset0 serves as a set current value of the discharge control current loop 193 after being multiplied by 1 through a first multiplier 164, the input port 0 of the second switch module 163 is turned on at the same time, and the first set current value Iset0 serves as a set current value of the charge control current loop 194 after being multiplied by 0 through a second multiplier 165. In this case, the set current value of the discharge control current loop 193 is Iset0, and a current control error is calculated by comparing the set current value with the direct current bus sampling current It by a second comparison module 166. The current control error is adjusted by a second PI control algorithm 168 and a first transfer function 170, to generate a discharge current control signal. However, the set current value of the charge control current loop 194 is 0, and charge control is not performed. Therefore, the battery charge/discharge control module M1 outputs a discharge current control signal, and the discharge current control signal controls the charging/discharging module 1020 to implement a discharge function, so that the battery 1021 supplies power to the increased load of the load 104, thereby maintaining a stable output power of the alternating current power supply.

The first preset current threshold I1 is in direct proportion to the current average value Iav, and Iav=Pav/Uref, preferably, I1=(1+X1)*Iav, where X1 is a first current limit coefficient, and a range of the first current limit coefficient may be determined according to an actual requirement, for example, the range is 5% to 35%.

When the first set current value Iset0 is less than the second preset current threshold I2, the input port 0 of the first switch module 162 is turned on, the first set current value Iset0 serves as the set current value of the discharge control current loop 193 after being multiplied by 0 through the first multiplier 164, the input port 1 of the second switch module 163 is turned on at the same time, and the first set current value Iset0 serves as the set current value of the charge control current loop 194 after being multiplied by 1 through the second multiplier 165. In this case, the set current value of the charge control current loop 194 is Iset0, and a current control error is calculated by comparing the set current value with the direct current bus sampling current It by a third comparison module 167. The current control error is adjusted by a third PI control algorithm 169 and a second transfer function 171, to generate a charge current control signal. However, the set current value of the discharge control current loop 193 is 0, and discharge control is not performed. Therefore, the battery charge/discharge control module M1 outputs a charge current control signal, and the charge current control signal controls the charging/discharging module 1020 to implement a charge function to perform DC-DC conversion on the direct current that is output by the rectifier module 1010 and exceeds the power requirement of the load 104, so as to charge the battery 1021, thereby maintaining a stable output power of the alternating current power supply.

The second preset current threshold I2 is in direct proportion to the current average value Iav, and Iav=Pav/Uref, preferably: I2=(1-X2)*Iav, where X2 is a second current limit coefficient, and a range of the current limit coefficient may be determined according to an actual requirement, for example, the range is 5% to 35%.

When the first set current value Iset0 is I2 ≤ Iset0 ≤I1, the battery charge/discharge control module M1 does not perform a function thereof.

The rectifier controller of the UPS 100 includes a rectifier control module M2.

The rectifier control module M2 is configured to keep the output power of the alternating current power supply 106 stable, and is further configured to: in an extreme case in which a decrement of the load amount of the load 104 is greater than the second preset threshold Th2, and the battery 1021 can no longer transfer the electric energy that is output by the alternating current power supply 106 and exceeds the power requirement of the load 104 (for example, a battery has been fully charged), control the direct current bus sampling voltage Ut not to exceed a direct current bus voltage limit Um, thereby avoiding a fault caused by an excessive voltage. The rectifier control module M2 includes a rectifier control voltage loop 190 and a rectifier control current loop 191. In the embodiments of the present invention, the direct current bus sampling voltage Ut refers to an actual voltage of the direct current bus of the primary branch 101 obtained by sampling.

The rectifier control voltage loop 190 compares the direct current bus voltage limit Um with the direct current bus sampling voltage Ut by a fourth comparison module 150, to calculate a voltage control error. Wherein, the direct current bus voltage limit Um is in direct proportion to the direct current bus reference voltage Uref, and Um=(1+Y)*Uref, where Y is a voltage limit coefficient, and a range of the voltage limit coefficient may be determined according to an actual requirement, for example, the range is 2% to 50%. After the voltage control error is adjusted by a fourth PI control algorithm 151, a first current reference value Iz is obtained. The first current reference value Iz is compared with a second current reference value Ix through a min module, and the minimum value of the two serves as a set current value Iset1 of the rectifier control current loop 191. Wherein, the second current reference value Ix=Pav/Uac, where Uac is a RMS value of an input voltage of the alternating current power supply 106. The rectifier control current loop 191 compares the set current value Iset1 with an output current It1 of the rectifier module 1010 by a fifth comparison module 152, to calculate a current control error. After the current control error is adjusted by a fifth PI control algorithm 153 and a third transfer function 154, a rectifier control signal is generated to control the rectifier module 1010 to output a stable current which is preferably maintained at the set current value Iset1.

When the direct current bus sampling voltage Ut is less than or equal to the direct current bus voltage limit Um, the second current reference value Ix is less than or equal to the first current reference value Iz. That is, the second current reference value Ix serves as the set current value Iset1 of the rectifier control current loop 191. The rectifier control current loop 191 outputs a rectifier control signal to control the rectifier module 1010 based on a comparison between the set current value Iset1 and the output current It1 of the rectifier module 1010. In this case, a control function of the rectifier control module M2 is to keep the output current of the alternating current power supply 106 stable.

In an extreme case, the load amount of the load 104 may be greatly reduced, and the battery 1021 has already been fully charged and can no longer transfer the electrical energy that is output by the alternating current power supply 106 and exceeds the power requirement of the load 104. When the direct current bus sampling voltage Ut is greater than the direct current bus voltage limit Um, the first current reference value Iz output by the rectifier control voltage loop 190 is less than the second current reference value Ix. That is, the first current reference value Iz serves as the set current value Iset1 of the rectifier control current loop 191. The rectifier control current loop 191 outputs a rectifier control signal to control the rectifier module 1010 based on the comparison between the set current value Isetl and the output current It1 of the rectifier module 1010. In this case, the control function of the rectifier control module M2 is to control the direct current bus sampling voltage Ut not to exceed the direct current bus voltage limit Um, thereby avoiding a fault caused by an excessive voltage.

According to another embodiment of the present invention, the charge/discharge controller of the UPS 100 further includes another battery charge/discharge control module, which is configured to: when the load does not fluctuate greatly, control the alternating current power supply 106 to charge the battery 1021 to a specified amount of power (e.g., 50% of the SOC); and when the alternating current power supply 106 fails, control the battery 1021 to supply power to the load 104.

In the embodiments of the present invention, the first PI control algorithm to the fifth PI control algorithm may also be any type of control algorithm applicable to the present invention, for example, a PID control algorithm.

In the present invention, through the foregoing control method, a stable power output of the alternating current power supply is implemented when a fluctuation of the load amount of the load exceeds a preset threshold, and the output power of the alternating current power supply does not fluctuate due to a large fluctuation of the load, thereby avoiding impact caused by the large fluctuation of the load on the alternating current power grid and electrical devices thereof or avoiding inefficient electricity production of a generator and the like caused by the large fluctuation of the load. In addition, when the load increases greatly, the battery 1021 is controlled to supply power. Therefore, impact of an instantaneous high output current from the alternating current power supply 106 due to a large increase in a load current on other electrical devices is avoided.

According to the foregoing specific embodiments of the present invention, the output power of the alternating current power supply may basically keep stable under a large load fluctuation. As shown in FIG. 6, curve 1 indicates a change curve of a percentage of an AI load power to a rated power of the UPS with time, and curve 2 indicates a change curve of a percentage of the input power of the alternating current power supply to the rated power of the UPS with time. It can be seen that the output power of the alternating current power supply does not change with a fluctuation of the load, but basically keeps stable in a long time range, thereby resolving a problem of impact of a load fluctuation on the alternating current power grid and electrical devices thereof or a problem of inefficient electricity production of a generator caused by the large fluctuation of the load.

Although the embodiments of the present invention are described in the background of a data center or an AI load, the description is illustrative rather than limiting. The embodiments of the present invention are also applicable to power supply systems in other scenarios, such as a hospital.

The reference to "various embodiments", "some embodiments", "one embodiment", "an embodiment", or the like in the specification means that specific features, structures, or properties described with reference to the embodiments are included in at least one embodiment. Therefore, the phrase "in various embodiments", "in some embodiments", "in one embodiment", "in an embodiment", or the like does not necessarily refer to the same embodiment throughout the specification. In addition, the specific features, structures, or properties may be combined in any suitable manner in one or more embodiments. Therefore, the specific features, structures, or properties shown or described with reference to one embodiment may be combined, in whole or in part without limitation, with the features, structures, or properties of one or more other embodiments, provided that the combination is not non-logical or inoperable.

The terms "include" and "have" as well as term expressions with a similar meaning in the specification are intended to cover a non-exclusive inclusion, for example, a process, a method, a system, a product, or a device that includes a series of steps or units is not limited to the listed steps or units, but optionally further includes an unlisted step or unit, or optionally further includes another step or unit inherent to the process, the method, the product, or the device. "An" or "one" does not exclude multiple cases. In addition, the elements in the accompanying drawings of the present application are merely used for schematic description, and are not drawn in a scale.

Although the present invention has been described by using preferred embodiments, the present invention is not limited to the embodiments described herein, and includes various changes and variations without departing from the scope of the present invention.

## Claims

1. An uninterruptible power supply, comprising:
an input terminal, configured to be electrically connectable to an alternating current power supply;
an output terminal, configured to be electrically connectable to a load;
a primary branch, comprising a rectifier module and an inverter module that are electrically connected in sequence between the input terminal and the output terminal;
a battery branch, comprising a bidirectional power conversion module and a battery, and configured to be electrically connected to a node between the rectifier module and the inverter module; and
a controller, comprising a charge/discharge controller, the charge/discharge controller being configured to:
when an increment of a load amount of the load is greater than a first preset threshold, control the bidirectional power conversion module to perform DC-DC conversion on a direct current output by the battery, so that the battery supplies power to the load to meet an increased power requirement of the load, thereby maintaining a stable output power of the alternating current power supply; and
when a decrement of the load amount of the load is greater than a second preset threshold, control the bidirectional power conversion module to perform DC-DC conversion on a direct current that is output by the rectifier module and exceeds a power requirement of the load, so as to charge the battery, thereby maintaining a stable output power of the alternating current power supply.

2. The uninterruptible power supply according to claim 1, wherein the charge/discharge controller is configured to:
provide a first set current value based on a comparison between a direct current bus reference voltage and a direct current bus sampling voltage of the primary branch;
when the first set current value is greater than a first preset current threshold, control the bidirectional power conversion module based on a comparison between the first set current value and a direct current bus sampling current, so that the battery supplies power to the load, thereby maintaining a stable output power of the alternating current power supply; and
when the first set current value is less than a second preset current threshold, control the bidirectional power conversion module to charge the battery based on the comparison between the first set current value and the direct current bus sampling current, thereby maintaining a stable output power of the alternating current power supply.

3. The uninterruptible power supply according to claim 2, wherein the controller is further configured to obtain an average load amount of the load over a specified period of time.

4. The uninterruptible power supply according to claim 3, wherein the first preset threshold and the second preset threshold are 5% to 30% of the average load amount.

5. The uninterruptible power supply according to claim 3, wherein the first preset current threshold and the second preset current threshold are in direct proportion to a current average value, and the current average value is a ratio of the average power of the load over the specified period of time to the direct current bus reference voltage.

6. The uninterruptible power supply according to any one of claims 2 to 5, wherein the controller further comprises a rectifier controller and an inverter controller, wherein the rectifier controller is configured to control the rectifier module and the inverter controller is configured to control the inverter module.

7. The uninterruptible power supply according to claim 6, wherein the rectifier controller is configured to: when the decrement of the load amount of the load is greater than the second preset threshold and the battery has been fully charged, control an actual voltage of a direct current bus of the primary branch not to exceed a direct current bus voltage limit.

8. The uninterruptible power supply according to claim 7, wherein the rectifier controller is further configured to:
provide a first current reference value based on a comparison between the direct current bus voltage limit and the direct current bus sampling voltage;
provide a second current reference value, the second current reference value being a ratio of the average power of the load over the specified period of time to a RMS value of an input voltage of the alternating current power supply;
use the minimum value in the first current reference value and the second current reference value as a second set current value; and
control the rectifier module based on a comparison between the second set current value and an output current of the rectifier module.

9. The uninterruptible power supply according to any one of claims 1 to 5, wherein the bidirectional power conversion module comprises two separate DC-DC converters or the bidirectional power conversion module is a bidirectional DC-DC converter.

10. The uninterruptible power supply according to any one of claims 7 to 8, wherein the direct current bus voltage limit is in direct proportion to the direct current bus reference voltage.
